# EUROPEAN PATENT APPLICATION

(11) **EP 1 083 714 A1**
(43) Date of publication of application: **14.03.2001**
(21) Application number: 99202880.3
(22) Date of filing: 08.09.1999
(51) Int. Cl.: H04L 12/58, H04L 29/12

(54) **Method for e-mail communication, apparatus therefor and use of said method and apparatus for electronic metering and for home automation**

(71) Applicant: Van Dalen Management B.V., 5581 GM Waalre (NL)
(72) Inventor: Van Dalen, Pieter Adriaan, 5581 GM Waalre (NL)
(74) Representative: De Clercq, Ann

(57) **Abstract**

The invention relates to a method for establishing e-mail communication between two users who both have access to the Public Switched Telephone Network, without the need of being connected to the Internet.

The invention further relates to an apparatus therefor and use of said method and apparatus for electronic metering and for home automation.

## Description

### Field of the invention

The invention relates to a method for e-mail communication, apparatus therefor and use of said method and apparatus for electronic metering and for home automation.

In a first aspect the present invention relates to a method and apparatus which allows Internet-type-communication between users connected via publicly switched telephone networks wherein the Internet as a transport medium is not required.

The primary application thereof is electronic mail. However, the method and apparatus allow many other Internet-type applications. In particular two important applications have been addressed here:
- Electronic meter-reading (an application of importance for e.g. utility companies), and
- Home / building automation applications.

New is that the method and the apparatus allow e-mail transmission between two addresses connected to the traditional public switched telephone network. The new inventive applications based on this new e-messaging concept, are:
1. All e-mail based messaging modalities;
2. Remote meter-reading;
3. Remote switching of devices/appliances connected to a home/building "intranetwork" (As "intranetwork" in our invention serves the main power network).

The preferred embodiment of the invention in this application is referred to as TeleMail method and TeleMail device.

A second aspect of the invention relates to a system and method of remotely collecting metering information from customer premises by making use of Internet technology, in combination with the TeleMail concept.

A third aspect of the present invention relates to a system and method of performing home automation functions as a TeleMail-based application. The TeleMail device is used to control a home automation network.

### Background of the invention

Currently, communication via e-mail by users which are not permanently connected to the Internet (e.g. homes, small offices) is only possible by making use of the services provided by Internet Service Providers (ISPs). This has two important disadvantages:
sending and receiving e-mail can only be done by making use of a computer, and by accessing the Internet via the server of the ISP;
arrival of new e-mail messages can only be detected by logging in to the server of the ISP.

The first item makes e-mail communication unattractive to many potential users, since a computer poses a relatively large investment, and because still many people find a computer hard to use (even when the computer is fully configured by the vendor).

The second item also makes e-mail via ISPs unattractive, because some time-consuming steps need to be taken to detect the arrival of new (unread) e-mail messages:
- booting the personal computer;
- invoking the operating system (e.g. Microsoft Windows 98);
- starting Internet application software (e.g. Netscape) ;
- connecting and logging in to the Internet server.

When no new e-mail messages have arrived, this effort has been in vain.

To avoid these difficulties in the prior art, it would be desirable to provide a method and apparatus which makes e-mail communication as easily applicable and intuitive to use as, for example, telephone and facsimile communication, and which does not require involvement of third parties (e.g. an Internet Service Provider), without ruling out the possibility of Internet communication in the conventional manner (i.e. via an Internet Service Provider).

The invention provides therefor a method according to claim 1.

Preferred embodiments of the method are given in claims 2 and 3. The invention is further related to a method according to claims 4 and 5. The apparatuses of the invention are given in claims 5 to 8.

Regarding the second aspect, currently, collection of metering information (e.g. by the electricity company) is either done by persons who visit the customer location in order to read the numbers on the meter, or the customers themselves report the numbers periodically. In the latter case, the numbers still need to be verified by officials of the utility company every once in a while. This has two major disadvantages:
collection of metering information is labor-intensive and therefore costly;
the metering information cannot be used for load monitoring and anticipation;
a need exists to provide a method and system which allows utility companies to remotely collect metering information from the customer premises which - depending on the sampling frequency - can also be used for operations management purposes.

In the third aspect an interesting application of the Telemail device can be developed, in connection with the main power network, which can function as a home automation network.

In the following it is described how the TeleMail device can operate - via signals transmitted along the power network - various appliances in a home or a building. (N.B. The term appliance is used in the most general sense of the word. It may mean a domestic appliance, light bulb, electronical switch, heating system, etc.)

Consequently the following needs are fulfilled:
1. a person who finds himself outside his home / building can switch on/off appliances by sending the relevant information message(s) to his TeleMail device (Either using e.g. another TeleMail device, or e.g. a programmed Palmtop device);
2. the TeleMail device transmits the signal in question to the particular appliances, which will then react (e.g. switch on/off).

### Summary of the invention

The present invention is a method and apparatus (consisting of hardware, firmware, and software) for establishing e-mail communication between two users which both have access to the Public Switched Telephone Network (PSTN). The apparatus has sender and receiver functions.

An essential feature of the invention is the use of TCP/IP for communication within the realm of the Public Switched Telephone Network between two TeleMail devices which do not have to be connected to the Internet. This implies that Internet protocol suite applications can be realized in conventional networks. It also means that for a number of applications Internet connectivity and conventional connectivity become merely complementary.

As a sender, the appliance offers the possibility of composing, editing, opening, storing and sending e-mail messages through a Graphical User Interface (GUI) application. The messages have a TCP/IP protocol suite compliant structure and format. This includes the possibility of an attachment of data files to the e-mail message.

As a sender, the appliance is capable of establishing TCP/IP communication with a similar and compatible receiving device over the PSTN (either through a modem or directly over an ISDN), according to the Point-to-Point Protocol (PPP). Where IP addresses are needed for PPP and TCP/IP communication, dummy addresses are derived from the communicating parties' telephone numbers which are stored in both the sender and receiver apparatus. In a similar manner wireless communication could be realized (e.g. by using GSM as network interface) .

As a receiver, the appliance is able to respond to an incoming telephone call by going off-hook, and establishing TCP/IP communication with the sender apparatus. Once the data communication is established, the e-mail message can be transferred to the receiver device according to the Simple Mail Transfer Protocol (SMTP) or another Internet Suite Protocol. The apparatus will be in stand-by mode as long as it is switched on.

As a receiver, the apparatus is able to store incoming e-mail messages and activate a visual and/or audible indicator that new e-mail has arrived.

As a receiver the apparatus is able to visually present e-mail messages through a Graphical User Interface application. This includes presentation of data files which can be attached to the e-mail message.

The apparatus can be realized as a stand-alone unit which accomodates all the functions needed to fulfil the service of the present invention. Alternatively, the apparatus can be realized as a peripheral device to a computer. Such peripheral would accomodate only those functions which are needed to receive and store incoming e-mail messages.

Since the apparatus is conceived to communicate via TCP/IP channels, it can also be employed to make use of other Internet applications, such as World Wide Web (WWW), File Transfer Protocol (FTP), etc.. For such applications, the user would need to log on to the Internet server of an ISP. Connected to the Internet, the user can also make use of the conventional e-mail service, as offered by an ISP.

Because the apparatus is able to accept calls and to receive e-mail messages autonomously, the apparatus can also be called by Internet Service Providers to transfer newly arrived e-mail messages to the premises of the e-mail addressee. Thus, it can contribute to a reduction of required disk space on the server of the ISP, and alert the addressee almost instantaneously of newly received e-mail.

Other possible TeleMail applications in the information society are given hereunder.

The obvious application is that of sending e-mail via the existing telephone networks between addresses connected to these networks. The physical connection and data link is similar to that used for data communications via telephony, the electronic message is transferred according to the TCP/IP protocol suite (in particular SMTP).

In case of e-commerce/e-business communication a display device is required for convenience. Therefor a TV set or other display device would be appropiate.

It is mentioned here that this message transfer via traditional telephone networks is far more secure than via Internet transfer (may be of importance for e.g. messages containing sensitive data).

The user of a TeleMail device can communicate to Internet addresses, via telephoning an Internet access provider. For e-commerce/e-business applications, a TV set or another display device could be used when the communication requires visualization.

Businesses/Institutions can communicate with TeleMail devices using either Internet or traditional network communications, on the basis of the TCP/IP communication, and the message forwarding included in the TeleMail concept.

This may become quite advantageous e.g. in the following cases:
1. Each physical address, accessible via telephone connectivity can receive e-mail and thus replace traditional mail. This may lead to significant cost savings for businesses/organizations due to the 'short-circuiting' of the traditional mailing system.
2. Each physical address, accessible via telephone connectivity, can be contacted by utility companies for periodic meter-reading. As an instance this may be of advantage for electricity companies' load management system and program responsibility. Obviously this will lead to significant cost savings. This application may require special arrangements to safeguard privacy (see the second aspect of the present invention).
3. The Telemail device can be used as a central server of a home "intranetwork". Such TeleMail device can store a website. Consequently, each appliance at a physical address, connected to the home "intranetwork" is accessible via telephone connectivity, and can be operated via the public switched telephone network by interacting between its TeleMail website and a device connected elsewhere to the telephone network (e.g. palmtop or other TeleMail device). Obviously this will lead to a straightforward operation of appliances in a home (or building) and somebody operating from the outside.

Call-centers are increasingly being contacted also via e-mail. The TeleMail device also provides call-center communication. Also for the functioning of the call-center the TeleMail connectivity is advantageous, since confirmations of agreements can be forwarded on-line.

Businesses are able to improve direct marketing methods since they can combine within their ICT systems results of their data mining and contact customers via TeleMail efficiently and effectively.

Since TeleMail devices can be used like telephony devices, messages can be delivered anywhere/anytime, much more readily than in case of "conventional" e-mail communication which has to go via a PC.

For Businesses/Institutions significant financial benefits may develop since the number required of software licences could be reduced drastically.

The second aspect of the present invention is a method and system according to claims 9-13 (consisting of hardware, firmware, and software) for establishing e-mail communication through the Public Switched Telephone Network (PSTN) between a device installed at the customer premises (called MeterNet Box) and a host at the premises of the utility company (called MeterNet Host), which interfaces with the server of the utility company. The devices at both ends have sender and receiver capabilities, and both have access to the PSTN.

The data communication between Box and Host is established and maintained according to the TCP/IP protocol suite (PPP in particular), the physical connection being provided through a modem or ISDN. The data communication provides a full-duplex path to the applications at both ends.

Two scenarios apply for the operation of the present invention. In the first scenario, the MeterNet Box at the customer location is polled by the MeterNet Host to retrieve metering information (e.g. at regular intervals for billing purposes). In the second scenario, the MeterNet Box at the customer location autonomously establishes a connection to the MeterNet Host (e.g. for status and error reporting, or upon detection of events specified by the utility company). To avoid costs at the customer's expense in the latter case, the utility company may provide a toll-free number for dial-in connections.

Once the data communication between Box and Host (or vice versa) has been established, the Box application can exchange information with the Host application. To identify itself to the Host application, the Box is assigned a unique 32-bit identifier which is also used as (alias) IP address for protocol purposes.

Since the utility company can access the metering information without knowledge of the customer, it may be desirable or even required to send a notification to the customer that the information has been collected (either via electronic or postal mail).

The third aspect TeleControl functionality is an application based on the TeleMail platform according to claims 14-18. Two major functions can be distinguished within the TeleControl application:
1. centralized, user-definable control over accessible devices;
2. providing remote access to the above function.

The first function is realized by connecting a home automation control unit to one of the general-purpose interfaces of the TeleMail device. The control-unit can address other units through a power-line modem. These units in their turn can control devices such as light bulbs, switches, heating systems, domestic appliances, alarm systems, etc.. Alternatively, the control unit can be integrated in the TeleMail device enclosure.

The user can access the TeleControl functionality through a graphical user interface (GUI) which runs as a TeleMail application. The graphical user interface consists mainly of an HTML file, which can be presented with any compliant web browser application. Through the user interface, the user can invoke Common Gateway Interface (CGI) processes on the TeleMail device, which in their turn control a target device.

Remote access to the TeleControl (second function) functionality is provided by calling the TeleMail device and loading the TeleControl HML file into a web browser at the remote location. A personal computer with modem or other TeleMail device can be used for this purpose.

### Brief Description of the Drawings

In the drawings three sets of figures are given. The same reference numbers have been used for each of the separate sets A, B and C. A, B and C respectively are illustrations of embodiments of the first, second and third aspect of the invention.

Figure A.1 is a functional block diagram of the TeleMail system according to the present invention, including two (2) TeleMail devices [T1] and [T2] at the user premises, and a TeleMail device [T3] at the premises of an Internet Service Provider, all with access and connected to the Public Switched Telephone Network [PSTN].

Figure A.2 is a functional block diagram of an embodiment of a stand-alone TeleMail device [T4], according to the present invention.

Figure A.3 is a functional block diagram of an embodiment of a computer-peripheral TeleMail device [T5], according to the present invention.

Figure A.4 is a functional block diagram of an embodiment of a TeleMail device [T6] employed for forwarding e-mail messages from the ISP premises to the user premises, according to the present invention.

Figure A.5 is an architecture diagram of the TeleMail embedded software [AS1], according to the present invention.

Figure A.6 is a functional block diagram of the TeleMail application software [AS2] for forwarding e-mail messages to a TeleMail device by an Internet Service Provider, according to the present invention.

Figure A.7 is a simplified OSI model representation of the TeleMail communication through an ITU-T I.series compliant Integrated Services Digital Network (ISDN).

Figure A.8 is a simplified OSI model representation of the TeleMail communication over an ITU-T V.series compliant modem (e.g. V.32, V.34, V.90) over the Public Switched Telephone Network.

Figure B.1 provides an overview of the MeterNet system, according to the present invention, including a number of MeterNet Boxes [M1], [M2] and [M3] at the customer premises, and a MeterNet Host [H1] at the premises of a Utility Company with connection to the Utility Company Server; all devices are connected and have access to the Public Switched Telephone Network [PSTN].

Figure B.2 is a functional block diagram of an embodiment of a MeterNet Box [M4], according to the present invention.

Figure B.3 is a functional block diagram of an embodiment of a MeterNet Host [H2], according to the present invention.

Figure B.4 is a flowchart description of the procedure to collect metering information from a single MeterNet Box.

Figure B.5 is a flowchart description of the procedure to report information by a single MeterNet Box to a MeterNet Host.

Figure B.6 is a simplified OSI model representation of the MeterNet communication over an ITU-T V.series compliant modem (e.g. V.32, V.34, V.90) over the Public Switched Telephone Network.

Figure B.7 is a simplified OSI model representation of the MeterNet communication through an ITU-T I.series compliant Integrated Services Digital Network (ISDN).

Figure C.1 provides an overview of the TeleControl system, according to the present invention, including a set of two TeleMail devices [TM1] and [TM2], a TeleControl System Control Unit [SCU], and a number of Appliance Control Units [ACU1], [ACU2], and [ACU3]; all control units are connected to the in-house mains network [MNW]. The Appliance Control Units interface with appliances [APP1], [APP2], and [APP3], respectively. An Application Control Unit may also be integrated in the appliance enclosure, as illustrated for [ACU3/APP3]. Both TeleMail units are connected to the Public Switched Telephone Network [PSTN]. Both TeleMail units have a display [DIS] as output device for the TeleControl Graphical User Interface. The display of TeleMail device [TM2] is not shown.

Figure C.2 is a functional block diagram of an embodiment of a System Control Unit, according to the present invention.

Figure C.3 is a functional block diagram of an embodiment of an Appliance Control Unit, according to the present invention.

Figure C.4 is an architectural block diagram of the TeleControl application.

### Detailed Description of the Invention

Figure A.1 shows two TeleMail communication devices **101** and **102** of the present invention, and the system in which it operates. Both devices have access to the Public Switched Telephone Network (PSTN) **104** through subscriber loops (**114** and **115**). The sender device **101** opens a switched telephone connection **106** through the PSTN **104**. Once the connection is established, transfer of the electronic data between the sender and receiver applications commences.

In Figure A1, a TeleMail device **103** which is employed for forwarding e-mail messages from a Mail Server **112** to a TeleMail device **101** at the customer premises is also depicted. In this case the TeleMail device **101** functions as a receiver. Upon arrival of an e-mail message destined for a user who has a TeleMail device, the e-mail message is forwarded to the TeleMail device **103** at the premises of the Internet Service Provider (ISP). This TeleMail device maintains a database with the telephone numbers of all addressees who make use of the e-mail forwarding service. The TeleMail device **103** opens a switched telephone connection **105** through the PSTN **104**. Once the connection is established, transfer of the electronic mail from the ISP to the receiver application commences.

A block diagram of a stand-alone embodiment of a TeleMail device, according to the present invention, is shown in Figure A.2. Apart from the data transmission and line interfacing, all functions are performed by a microprocessor **201**. The microprocessor is supported by memory **205**, which comprises both volatile and non-volatile memory. The microprocessor provides its output on a display **202**. The user provides input through a keyboard **203** and a pointing device **204**. When a touch-screen is used as display, both keyboard and pointing device can be incorporated in the touch-screen. The microprocessor **201** has some general purpose interfaces (e.g. serial and parallel ports, USB) at its disposal which can be used to add peripherals (e.g. a printer, a Web camera, a joystick) as enhancement to the TeleMail functionality.

The line interface circuitry **208** is able to detect an incoming call, upon which it alerts the microprocessor. Thus, the TeleMail device is able to act as a receiver.

A block diagram of a computer-peripheral embodiment of a TeleMail device, according to the present invention, is shown in Figure A.3. Apart from the data transmission **307** and line interfacing **308**, all functions are performed by a microprocessor **301**. The microprocessor is supported by memory **306**, which comprises both volatile and non-volatile memory. The microprocessor provides status information through perceptible (e.g. visual and/or audible) indicators **305**. The computer-peripheral TeleMail device is configured by a host Personal Computer (PC) **302** through one of the interfaces **303** or **304**. A TeleMail host application on the host PC **302** provides the (graphical) user interface with the user. E-mail message composition is done on the host PC. The outgoing messages are transferred from the host PC to the computer-peripheral TeleMail device through one of the interfaces **303** or **304**.

Since the computer-peripheral TeleMail device has its own power supply, it is able to receive incoming messages, independent of the host PC, in particular also when the PC is disconnected or powered down. Incoming messages are stored in memory **306**, until the connection to the host PC **302** is (re)established. Once the connection is (re)established, the received messages are transferred to host PC **302** through one of the interfaces **303** or **304**. Thus, the computer-peripheral TeleMail device can be seen as an enhanced (external) modem, with autonomous message receiving capabilities.

A block diagram of a TeleMail device which is employed at the premises of an Internet Service Provider (ISP) for forwarding of e-mail messages to a TeleMail device at the user premises, according to the present invention, is shown in Figure A.4. The main difference with the computer-peripheral TeleMail device described above (Figure A.3) consists of the Ethernet interface with the host computer, and the host application software. Also, the ISP TeleMail device offers both an analog (modem) and digital (ISDN) telephone line interface.

Apart from the data transmission **405/406** and line interfacing **407/408**, all functions are performed by a microprocessor **401**. The microprocessor is supported by memory **402**, which comprises both volatile and non-volatile memory. The microprocessor provides status information through visual and/or audible indicators **403**. The ISP TeleMail device is configured by a host computer (PC) **409** through the Ethernet interface **404**.

E-mails which arrive at the mail server of the ISP are transferred to the host computer **409** when the addressee makes use of the TeleMail message forwarding service. A database application on the host computer maintains a TeleMail database **410** of all e-mail addressees who make use of the TeleMail message forwarding service. The host computer retrieves the telephone number, and the line interface type (analog or ISDN) of the addressee TeleMail device from the TeleMail database. Along with the telephone number and line interface type information, the e-mail message is transferred to the ISP TeleMail device which transmits it to the TeleMail device of the e-mail addressee.

An architecture block diagram of the TeleMail software, according to the present invention, is shown in Figure A.5. The TeleMail software consists of a Graphical User Interface (GUI) **501**, application software **502**, an operating system **503**, and hardware drivers **504**. Although primarily intended for e-mail communication, other applications can be installed as enhancements, which may require that the TeleMail is equipped with additional periherals. For example, if a web camera is connected to the TeleMail devices at both ends (e.g. T1 and T2 in Figure A.1), it can be used for low-bandwidth video conferencing. Printing and scanning devices, addressed through the general purpose interfaces, can also provide added functionality.

A functional block diagram of the ISP TeleMail database software for forwarding of e-mail messages to a TeleMail device at the user premises, according to the present invention, is shown in Figure A.6. The software consists of two subsystems: a database application on the host computer, and an embedded TeleMail application on the processor of the ISP TeleMail device.

Messages which are forwarded by the ISP mail server to the ISP TeleMail host computer through interface **603**, are fed into a first-in first-out (FIFO) receive queue **601**, to avoid information loss in case of bursty message arrival. The size of this queue can be changed dynamically. The e-mail messages are read from the receive queue (function **602**), after which the telephone number and line interface type (modem or ISDN) is retrieved from a TeleMail database **604**. The e-mail message, along with the telephone number and line type of the addressee TeleMail device is then transferred to the ISP TeleMail device for further processing.

The embedded ISP TeleMail software assigns the message to an output queue, depending on the line interface type (function **606**). For addressees with an analog (modem) line interface, the message is fed into the Modem Output Queue **607**, after which it is physically transferred to the addressee TeleMail device (function **609**). For addressees with a digital (ISDN) line interface, the message is fed into the ISDN Output Queue **608**, after which it is physically transferred to the addressee TeleMail device (function **610**).

Depending on the type of subscriber loop (POTS or ISDN), the protocol stack differs. Figure A.7 shows the protocol stack for POTS, Figure A.8 shows the protocol stack for ISDN. The only difference lies in the physical layer which is a modem in case of POTS, or an ISDN interface directly in case of an ISDN.

Where IP addresses are needed for TCP/IP and PPP communication between two TeleMail devices which are not connected to the Internet, they are derived from the telephone number as follows:
I. The decimal telephone number (including area and country codes) is converted to a hexadecimal identifier;
II. The least significant 4 (four) bytes of the converted telephone number are used as alias IP address.
III. If the converted telephone number has a length of less than 4 bytes, it is extended with leading zeros.

For communication with an Internet server, the TeleMail device will be assigned a temporary IP address for the duration of the connection from an address pool maintained by the Internet server (according to the PPP protocol).

A number of MeterNet Box (**101, 102, 103**) and a MeterNet Host device (**105**) of the present invention, and the system in which it operates is shown in Figure B.1. All devices have access to the Public Switched Telephone Network (PSTN) **104** through subscriber loops (**108, 109, 110,** and **111**). The MeterNet Host device **105** also communicates with a server computer of the utility company (**106**). In order to establish communication between the MeterNet Box **102** and the MeterNet Host **105,** either device can open a switched telephone connection **107** through the PSTN **104**. Once the connection is established, transfer of the electronic data between the sender and receiver applications commences.
A block diagram of an embodiment of a MeterNet Box device, according to the present invention, is shown in Figure B.2. Apart from the data transmission **202** and line interfacing **203**, all functions are performed by a microprocessor **201**. The communication port **202/203** can be an analog modem interface or a digital ISDN interface. The microprocessor is supported by memory **204**, which comprises both volatile and non-volatile memory. The microprocessor **201** has a meter interface **206** at its disposal which can be used to collect information from a compatible meter (not depicted). The line interface circuitry **203** is able to detect an incoming call, upon which it alerts the microprocessor **201**. The MeterNet Box also comprises a storage unit **205** for a unique permanent 32-bit identifier, which also serves as alias IP address during TCP/IP communication.

A block diagram of an embodiment of a MeterNet Host device, according to the present invention, is shown in Figure B.3. Functionally, the MeterNet Host has two communication ports at its disposal: one for (analog) modem communication **302/303**, one for (digital) ISDN communication **304/305**. Depending on to which type of subscriber loop the MeterNet Box device is connected, the compatible communication port is selected. Physically, a MeterNet Host can comprise an arbitrary number of either port type. Apart from the data transmission **302/304** and line interfacing **303/305**, all functions are performed by a microprocessor **301**. The microprocessor is supported by memory **306**, which comprises both volatile and non-volatile memory. The microcontroller communicates with a server computer over a server interface **307**. The MeterNet Host can either be controlled and configured by software on the server computer, or provide a dedicated interface for this purpose.

A flowchart description of the procedure to collect metering information from a MeterNet Box by a MeterNet Host, according to the present invention, is shown in Figure B.4. Most likely the procedure is executed mainly by a software system. Functionally and physically, the procedure to retrieve information from a MeterNet Box by a MeterNet Host is divided over two subsystems: a database application on the server computer, and embedded software executed by the microprocessor of the MeterNet Host device. Both subsystems communicate with each other through the server interface of the MeterNet Host device. Please refer to the above description of Figure B.3 for details.

The core function of the MeterNet database application consists of a scheduler **401**. The scheduler **401** is responsible for servicing requests to collect information of a MeterNet Box device. The request can be either periodically at user-definable intervals, upon detection of user-definable conditions, or at the user's immediate request. A scheduler interface **413** provides access to the pending requests (e.g. for cancellation of a request). Once a request is serviced it is referred to as a job. A job also has knowledge of the information that needs to be collected from the addressed MeterNet Box. A job starts (step **402**) with the retrieval of a telephone number and line interface type (POTS or ISDN) of the addressed MeterNet Box from a database **403**. Both parameters are then transferred to the MeterNet Host device for further processing (step **404**). In the MeterNet Host the job is fed into a job queue, depending on the line type of the addressed MeterNet Box (step **405**). For each line type, an independent job queue is provided.

From the job queue, the jobs are fetched by the next step in the procedure (step **408** and **409**, for digital and analog line interfaces, respectively). In this step, the MeterNet Host opens a switched telephone connection to the addressed MeterNet Box, requests and receives the information from the addressed MeterNet Box, and terminates the connection. After succesful collection of the requested information, the information is transferred to the server (step **410**). The server updates the database with the newly acquired information (step **411**), and schedules the next request (step **412**).

A flowchart description of the procedure to report metering information by a MeterNet Box to a MeterNet Host, according to the present invention, is shown in Figure B.5. Upon detection of an event which was marked as requiring a report to the MeterNet Host (event **501**), the MeterNet Box opens a switched telephone connection to the MeterNet Host (step **502**). The MeterNet Host detects the incoming call (step **503**), and responds by going off-hook (step **504**), after which the data link is initialized (step **505**) in accordance with the Point-to-Point Protocol (PPP). After establishment of the data link, the data is transferred by the MeterNet Box to the MeterNet Host (step **506**). After succesful reception, the MeterNet Host triggers the update of the database **510** with the newly acquired information (step **507**). If no further information is needed the data link (step **508**) and telephone connection (step **509**) are terminated.

Depending on the type of subscriber loop (POTS or ISDN), the protocol stacks differ. Figure B.6 shows the protocol stack for POTS, Figure B.7 shows the protocol stack for ISDN. The only difference lies in the physical layer which is a modem in case of POTS, or an ISDN interface directly in case of an ISDN.

A System Control Unit (**102**) and a number of Appliance Control Units (**104, 105, 106**) connected to the respective appliances (**107, 108, 109**), and a TeleMail-based Graphical User Interface (GUI) application (**110**) of the present invention, and the system in which it operates is shown in Figure C.1. The application **110** runs on the TeleMail device **101**; it provides output on the display **104**. For reasons of simplicity, in this description the display **104** has touchscreen capabilities, and thus also functions as input device. This does not rule out other TeleMail device-configurations.

Only for remote access, do both TeleMail **101** and **111** devices need to be connected to the Public Switched Telephone Network **112**.

The GUI application **110** can be configured to suit the needs of the user. The user can add or remove new appliances. The GUI application will provide a control in the GUI screen for each appliance addressed by the TeleControl application, and provide all necessary underlying software modules (see description of Figure C.4). A number of controls is shown in the GUI application **110** of Figure C.1.

To illustrate the TeleControl functionality, appliance **107** is considered to be a light bulb, which can be switched on or off. If the user wants to change the state of the light bulb **107** (e.g. turn it off), he/she can invoke the GUI application **110**, which contains a control for each appliance addressed by the TeleControl application. The user can then activate the respective control in the GUI screen to perform the desired action.

Activation of the appliance control in the GUI screen will cause the GUI application to invoke a CGI process on the TeleMail device. The CGI process will trigger a message to be sent from the TeleMail device to the System Control Unit **102**. The System Control Unit will broadcast a message onto the mains network **103**, destined for Appliance Control Unit **104**.

The message contains the unique identifier of Appliance Control Unit **104**, and the instruction that needs to be performed (e.g. "turn off"). Due to the nature of broadcasting all Appliance Control Units (**104**, **105, 106**) will receive the message; only Appliance Control Unit **104** will handle the message, based upon recognition of its identifier.

The user can access the TeleControl application from a remote location by using another TeleMail device **111** to call the TeleMail device at the user premises **101**. Once the telephone connection **113** through the Public Switched Telephone Network **112** has been established, the user can load the GUI application into a web browser on TeleMail device **111**. Activating the controls in the GUI, has the same effect as accessing them locally (i.e. on TeleMail device **101**), as described above. Alternatively, also a PC can be utilized to communicate with the home TeleMail device.

A block diagram of an embodiment of a System Control Unit , according to the present invention, is shown in Figure C.2. Apart from the power-line modem functions **202** and mains interfacing **203**, all functions are performed by a microprocessor **201**. The microprocessor is supported by memory **204**, which comprises both volatile and non-volatile memory. The microprocessor **201** has a TeleMail interface **206** at its disposal which is used to receive command message and transmit report from/to the TeleMail device. The mains interface circuitry **203** connects to the mains network. The System Control Unit also comprises a storage unit **205** for a unique permanent network identifier. This identifier is used in combination with the identifiers of the connected Appliance Control Units to uniquely qualify the Appliance Control Units within a home automation network (see below).

A block diagram of an embodiment of a Appliance Control Unit, according to the present invention, is shown in Figure C.3. Apart from the power-line modem functions **302** and mains interfacing **303**, all functions are performed by a microprocessor **301**. The microprocessor is supported by memory **304**, which comprises both volatile and non-volatile memory. The microprocessor **301** has an appliance interface **306** at its disposal which is used to control the connected appliance. The mains interface circuitry **303** connects to the mains network. The Appliance Control Unit also comprises a storage unit **305** for a unique assignable identifier.

An architectural block diagram of the TeleControl application is shown in Figure C.4. The Graphical User Interface **401** consists of controls (**402, 403, 404**) to address appliances connected to the home automation network. It also contains a control to access and configure scheduler **406**. The scheduler **406** provides time-based operations on the appliances such as delayed execution of instructions, or at user defined (fixed or irregular) intervals. The appliance controls invoke a related Common Gateway Interface (CGI) process (**407, 408, 409**). The CGI processes make use of the System Control Unit device driver **410** to control the appliances addressed by the System Control Unit hardware **411**. The scheduler **406** also makes use of the same CGI processes (**407,408,409**) to perform its functions.

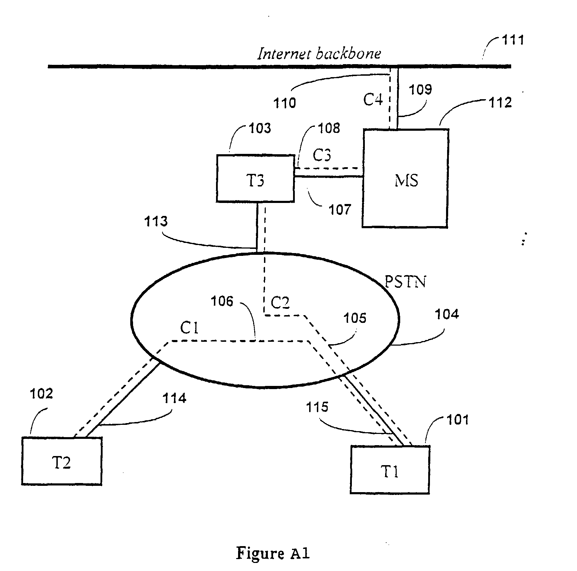

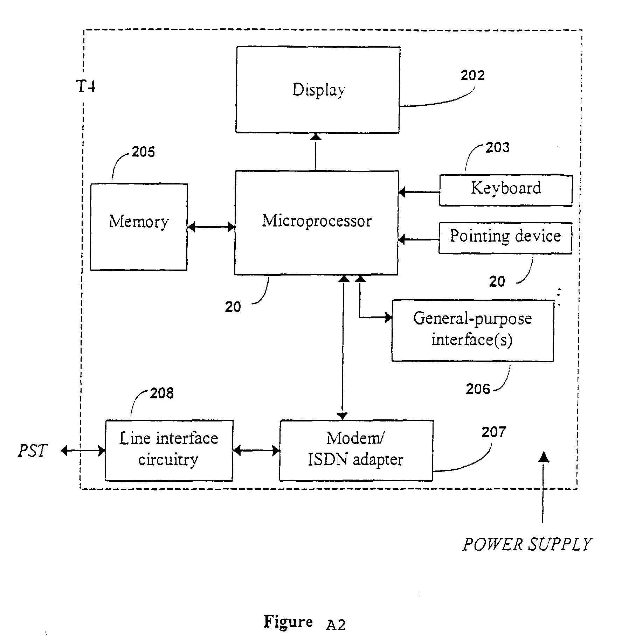

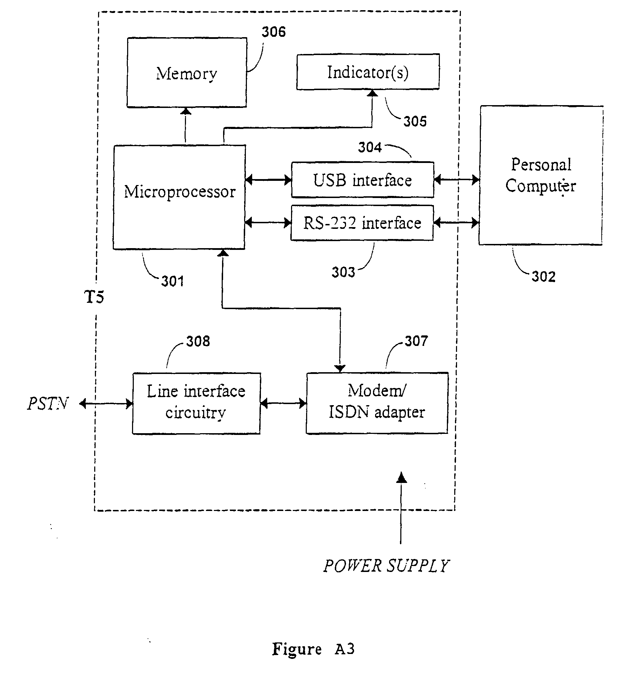

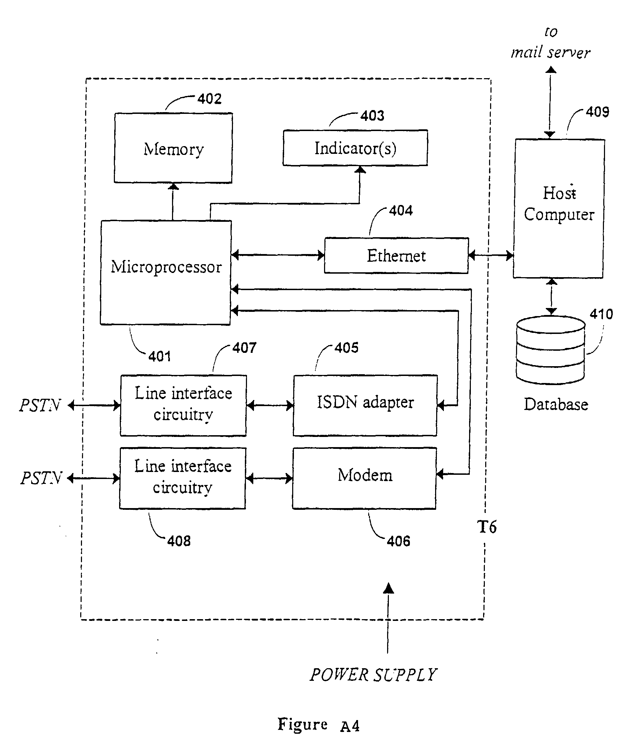

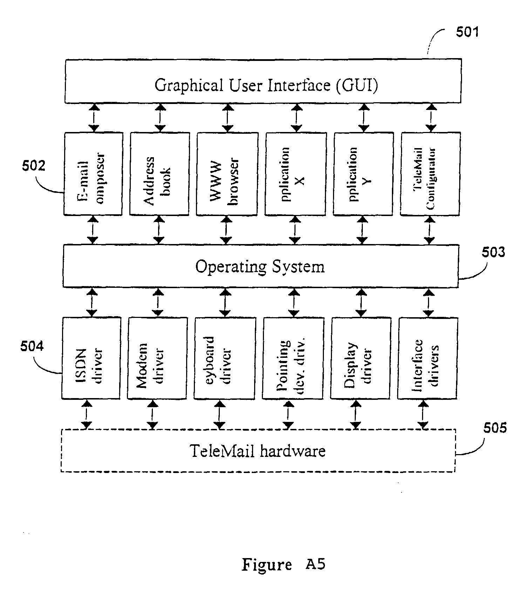

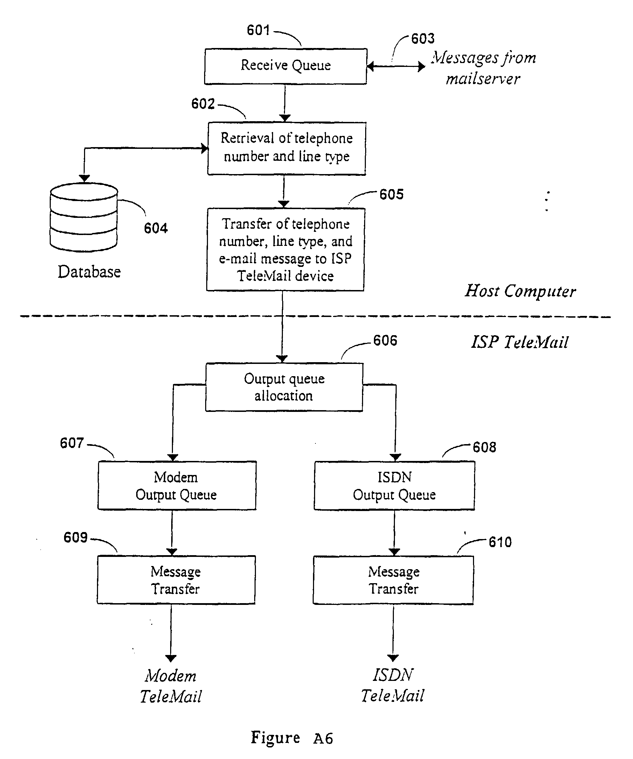

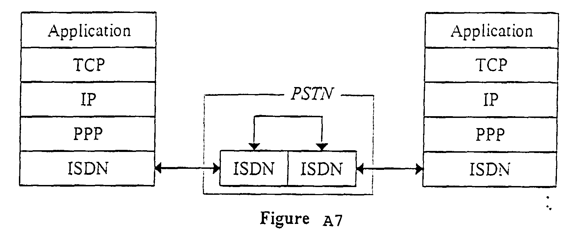

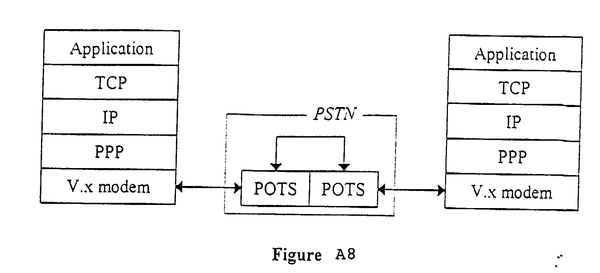

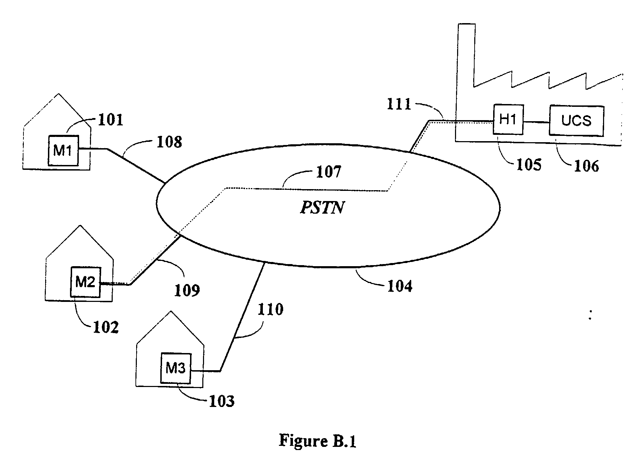

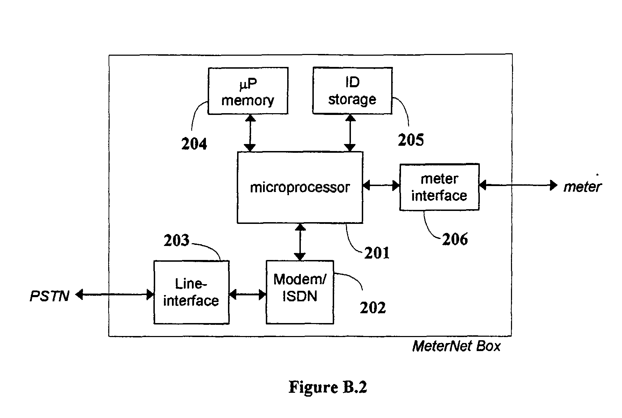

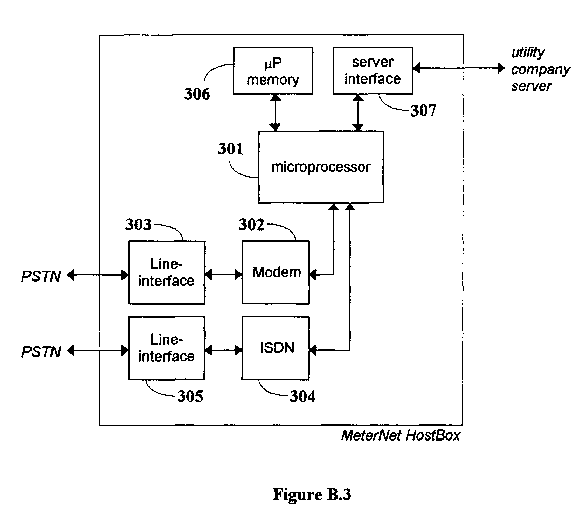

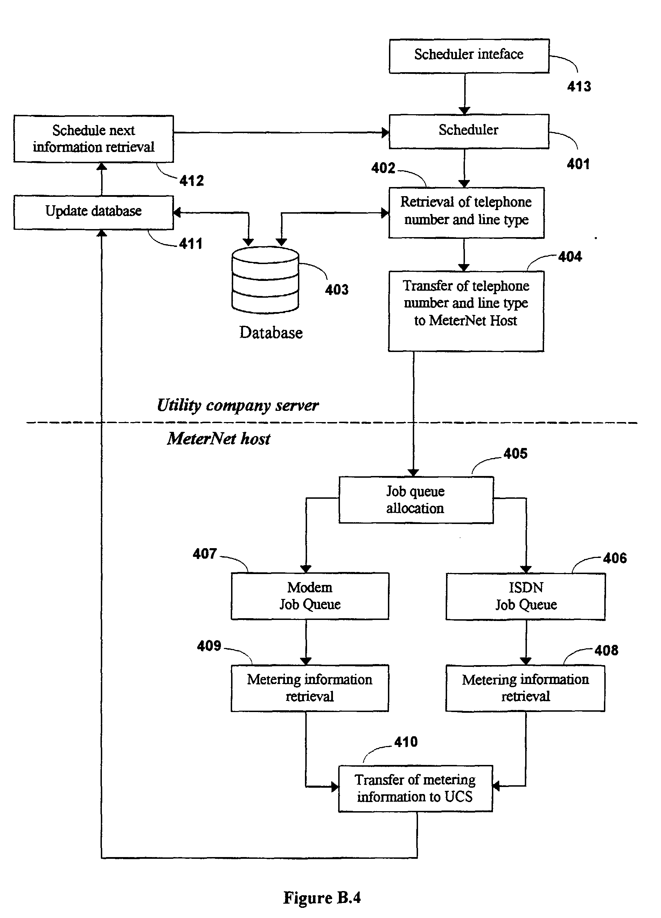

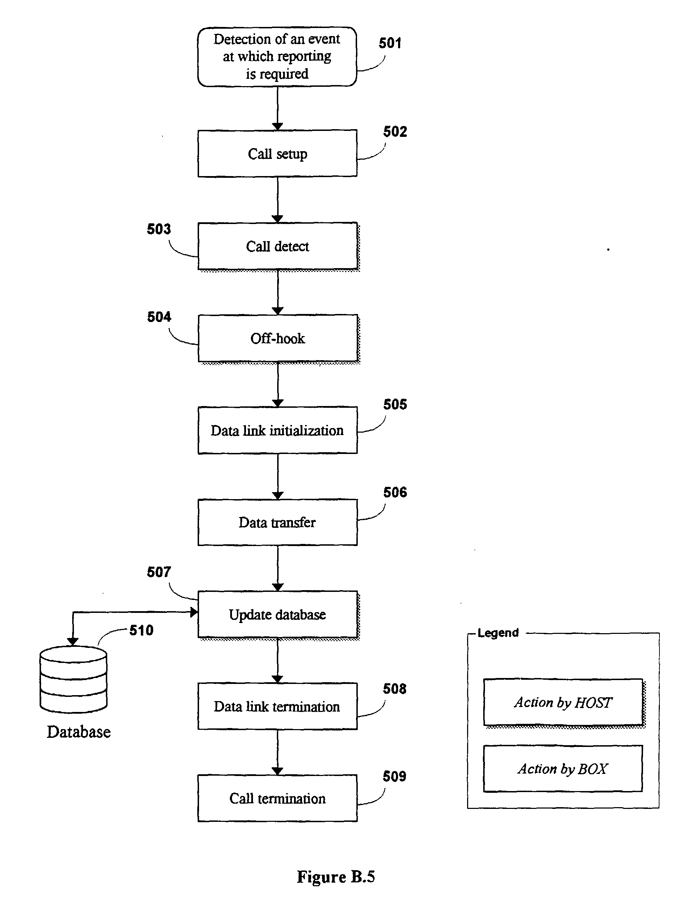

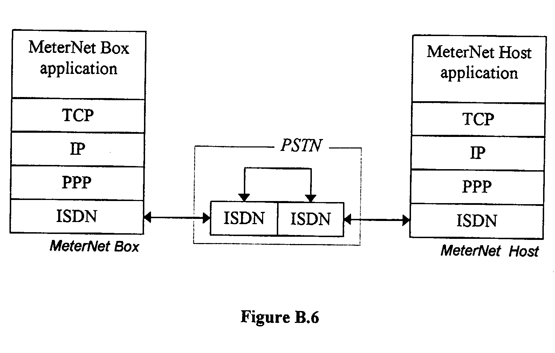

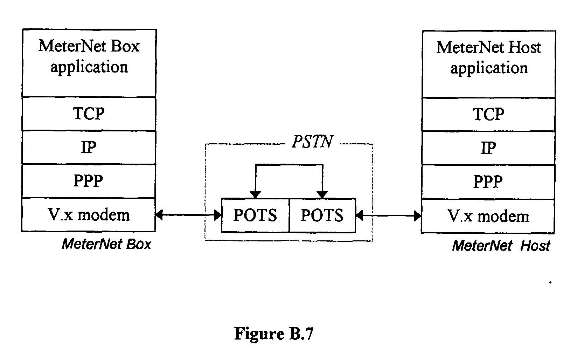

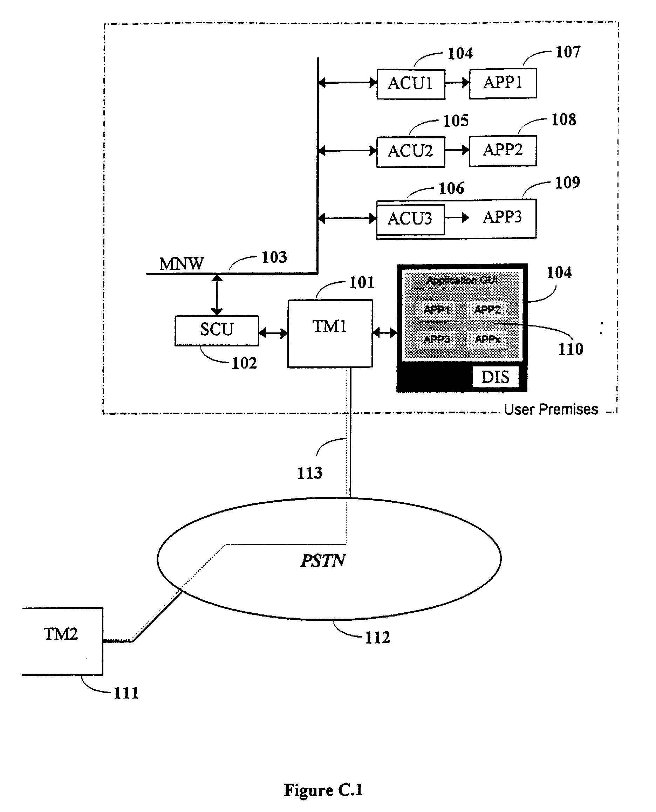

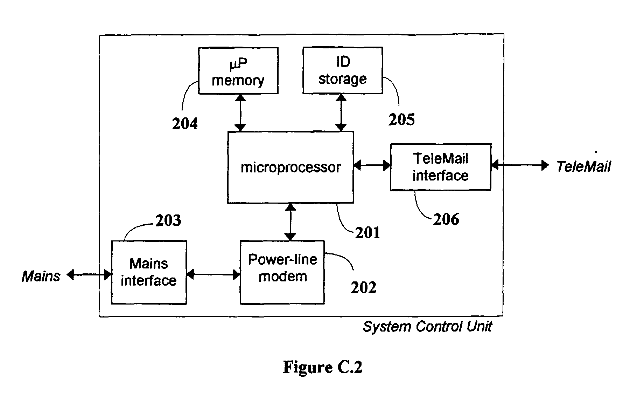

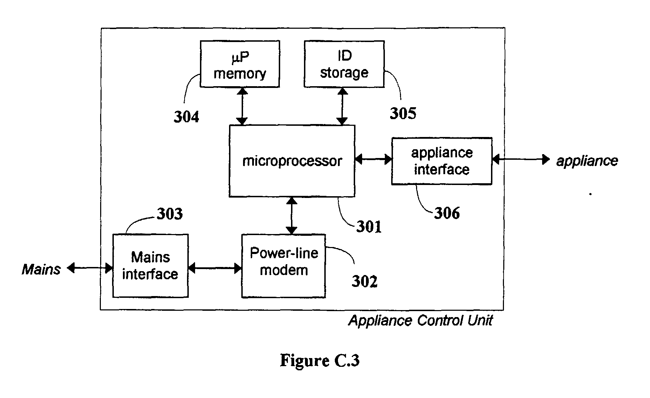

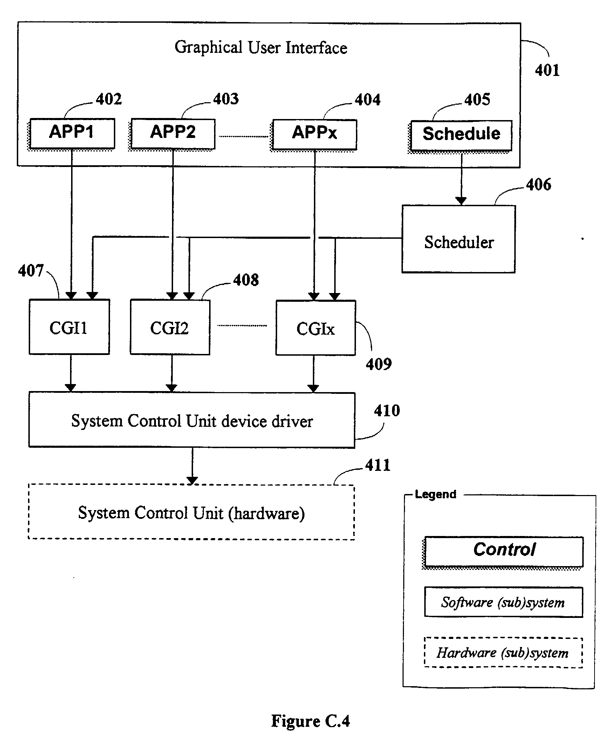

## Claims

1. A method for establishing e-mail communication between two users who both have access to the Public Switched Telephone Network, without the need of being connected to the Internet, comprising the steps of:
A) establishing the data link, and PPP connection between the sender and receiver application; and
B) transferring the e-mail message(s) to the receiver device over TCP/IP.

2. A method according to claim 1, further comprising the steps of:
C) composing one or more electronic mail messages through a Graphical User Interface application;
D) setting up a telephone connection to receiver device;
E) acceptance of the call by the receiver device;
F) storage of the e-mail message(s) on the receiver device;
G) termination of the data link and telephone connection;
H) perceptible (e.g. visual and/or audible) indication that an e-mail message has been received by the receiver application;
I) visual presentation of the e-mail message (including attached files) by the receiver Graphical User Interface application.

3. A method according to claim 1 or 2, further comprising the step of:
J) retrieving the telephone number of the receiver from a database;

4. A method of deriving an alias IP address from the telephone number, whereby the alias IP address is derived from a telephone number (including area and country codes) as follows:
- the decimal telephone number (including area and country codes) is converted to a hexadecimal identifier;
- the least significant four (4) bytes of the converted telephone number are used as alias IP address;
- if the converted telephone number has a length of less than 4 bytes, it is extended with leading zeros.

5. Method according to one of the previous claims 1-4, further comprising the step of forwarding an e-mail message from a mail server at the premises of an Internet Service Provider, to the receiver.

6. A stand-alone apparatus which is able to perform all the steps presented in one of the previous claims 1-5, both as receiver and sender.

7. Apparatus which is connected to a computer through an interface (e.g. RS-232), and which is independently able to perform the steps a,b,d,e,f and g in the previous claims 1-3, both as receiver and sender.

8. A Graphical User Interface application which interfaces with the apparatus presented in claim 7, and which performs the steps c, j and i presented in the previous claims 1-3.

9. Method of establishing communication according to claim 1 from a central host to devices at remote locations, all with access to the Public Switched Telephone Network (PSTN), in order to collect information from meters, comprising the steps of:
a) setting up a telephone connection from the central host to the device at the remote location;
b) acceptance of the call by the receiver device;
c) establishing the data link, and PPP connection between the sender and receiver application;
d) transfer the information to the host device over TCP/IP;
e) Termination of the data link and telephone call;
f) updating of the database by the host with the received information.

10. Method of establishing communication according to claim 1 to a central host by devices at remote locations, all with access to the Public Switched Telephone Network (PSTN), in order to transfer information from meters to the central host, comprising the steps of:
a) setting up a telephone connection to the central host by the device at the remote location;
b) acceptance of the call by the host device;
c) establishing the data link, and PPP connection between the sender and receiver application;
d) transfer the information to the host device over TCP/IP;
e) termination of the data link and telephone call;
f) updating of the database by the host with the received information;

11. Stand-alone apparatus to be installed at the remote location which is able to perform all the applicable steps presented in claims 9 and 10, both as receiver and sender.

12. Host apparatus to be installed at the central site which is able to perform all the applicable steps presented in claims 9 and 10, both as receiver and sender.

13. Method of using an arbitrary 32-bit identifier as alias IP address for the purpose of TCP/IP communication.

14. Method according to claim 1 of providing home automation network functionality as a TeleMail-based application, comprising the steps of:
a) connecting a System Control Unit to the TeleMail device, and to the in-house mains network;
b) inserting Appliance Control Units between the controlled appliances, and to the in-house mains network;
c) installation and configuration of the TeleControl application on the TeleMail device;
d) invocation of the TeleControl Graphical User Interface program;
e) activation of controls in the Graphical User Interface, which are directly related to an addressable appliance;
f) invocation of a Common Gateway Interface (CGI) process on the TeleMail device, to transfer an instruction to the addressed appliance through System Control Unit, and the mains network, to the Appliance Control Unit;
g) reception and evaluation of the instruction by the Appliance Control Unit;
h) execution of the instruction by the Appliance Control Unit;
i) closing of the TeleControl Graphical User Interface program;

15. Method according to claim 1 of automating the control over Appliances addressed by the TeleControl application, and connected to the mains network by means of a Scheduler as integrated function of the Graphical User Interface application, comprising the steps of:
a) invocation of the TeleControl Graphical User Interface program;
b) activation of the Scheduler control in the TeleControl Graphical User Interface program;
c) invocation and presentation of the Scheduler Graphical User Interface;
d) configuration of the Scheduler;
e) scheduling of actions at user-definable moments, and at user-definable fixed or irregular intervals;
f) closing of the Scheduler Graphical User Interface;
g) closing of the TeleControl Graphical User Interface program;
h) independent background execution of the scheduled actions by the Scheduler function, as described in steps f) through h) of claim 1.

16. Stand-alone or TeleMail-integrated System Control Unit to be connected to the TeleMail device, and to the mains network, which is able to perform all the applicable steps presented in claims 14 and 15.

17. Stand-alone or appliance-integrated Appliance Control Unit to be connected to the addressed appliance, and to the mains network, which is able to perform all the applicable steps presented in claims 14 and 15.

18. Method of combining a unique System Control Unit identifier, and an assignable Appliance Control Unit identifier to uniquely qualify a home automation network, and the member Appliance Control.Units connected to it.
